**Europäisches Patentamt**

**European Patent Office**

**Office européen des brevets**

(11) Veröffentlichungsnummer: **0 164 507**

**A1**

(12) **EUROPÄISCHE PATENTANMELDUNG**

(21) Anmeldenummer: **85103126.0**

(22) Anmeldetag: **18.03.85**

(51) Int. Cl.⁴: **H 02 M 1/092**
**H 03 K 17/08**

(30) Priorität: **15.06.84 DE 3422361**

(43) Veröffentlichungstag der Anmeldung:
**18.12.85 Patentblatt 85/51**

(84) Benannte Vertragsstaaten:
**AT CH DE FR GB IT LI SE**

(71) Anmelder: **Siemens Aktiengesellschaft**
**Berlin und München Wittelsbacherplatz 2**
**D-8000 München 2(DE)**

(72) Erfinder: **Thiele, Gerd, Dipl.-Ing.**
**Lessingstrasse 3b**
**D-8520 Erlangen(DE)**

(54) **Zündschaltung für einen Leistungsthyristor.**

(57) Bei der erfindungsgemäßen Zündschaltung ist zwischen Anode und Gate des Leistungsthyristors (3) ein Schwellwertelement, beispielsweise ein überkopfzündfester, lichtzündbarer Hilfsthyristor (5) oder ein lichtzündbarer Hilfsthyristor (5) mit parallel geschaltetem BOD-Element (6) geschaltet. Zur Anpassung der Stoßspitzenspannung $U_{DSM5}$ des Hilfsthyristors (5) oder des BOD-Elements (6) an die gegebenenfalls wesentlich größere Stoßspitzenspannung $U_{DSM}$ des Leistungsthyristors (3) ist die Anoden-Kathoden-Strecke des Leistungsthyristors (3) von zwei in Reihe geschalteten Serien-RC-Gliedern (1, 2) überbrückt, an deren Verbindungspunkt (4) ein Anschluß des Schwellwertelements (5, 6) geführt, ist. Für die Bemessung der beiden RC-Glieder (1, 2) gilt:

$$\frac{U_{DSM5}}{U_{DSM}} = \frac{C_1}{C_1 + C_2} = \frac{R_2}{R_1 + R_2} \quad \text{mit } R_1 \cdot C_1 = R_2 \cdot C_2$$

wobei das RC-Glied $R_1$, $C_1$ mit der Anode und das mit $R_2$, $C_2$ bezeichnete RC-Glied (2) mit der Kathode des Leistungsthyristors (3) unmittelbar verbunden ist. Die beiden RC-Glieder (1, 2) bilden vorzugsweise die RC-Beschaltung des Leistungsthyristors (3).

0164507

Siemens Aktiengesellschaft          Unser Zeichen
Berlin und München                  VPA **84P 3 2 1 7 E**

Zündschaltung für einen Leistungsthyristor

Die Erfindung betrifft eine Zündschaltung für einen Leistungsthyristor mit einem Schwellwertelement zur Schutzzündung bei Überspannung, das zwischen Anode und Gate des Leistungsthyristors geschaltet ist und dessen Stoßspitzensperrspannung $U_{DSM5}$ kleiner als die Stoßspitzenspannung $U_{DSM}$ des Leistungsthyristors ist.

Solche Zündschaltungen sind aus der DE-OS 31 31 894 bzw. aus dem Artikel "HGÜ-Ventilentwicklung" in "etz", 1981, Band, 102, Seiten 1338 bis 1342 bekannt. Als Schwellwertelement wird dabei in "etz" eine Hochspannungskippdiode auch BOD-Element (break over diode) genannt und in der DE-OS ein überkopfzündfester, gegebenenfalls lichtzündbarer Hilfsthyristor benützt. Bei solchen Schwellwertelementen ist die Stoßspitzenspannung häufig kleiner als die Stoßspitzenspannung der Leistungsthyristoren, dies gilt insbesondere, wenn höchstsperrende Leistungsthyristoren eingesetzt werden. Ein wirkungsvoller Schutz des Leistungsthyristors ist unter diesen Umständen nur gegeben, wenn mehrere solcher Schwellwertelemente in Reihe geschaltet werden, da sonst die Schutzzündung des Leistungsthyristors weit unterhalb seiner Stoßspitzenspannung einsetzt.

Es besteht die Aufgabe, bei einer Zündschaltung der eingangs genannten Art die Sperrfähigkeit des Schwellwertelements an die des Leistungsthyristors anzupassen.

Soe 2 Bim / 08.06.1984

0164507

Erfindungsgemäß wird diese Aufgabe dadurch gelöst, daß die Anoden-Kathoden-Strecke des Leistungsthyristors von zwei in Reihe geschalteten Serien-RC-Gliedern überbrückt ist, an deren Verbindungspunkt ein Anschluß des Schwellwertelements geführt ist und daß für die beiden RC-Glieder gilt:

$$\frac{U_{DSM5}}{U_{DSM}} = \frac{C_1}{C_1 + C_2} = \frac{R_2}{R_1 + R_2}$$

und

$$R_1 \cdot C_1 = R_2 \cdot C_2,$$

wobei $R_1$, $C_1$ der Widerstands- bzw. Kapazitätswert des mit der Anode des Leistungsthyristors und $R_2$, $C_2$ der Widerstands- bzw. Kapazitätswert des mit der Kathode des Leistungsthyristors unmittelbar verbundenen RC-Gliedes ist.

Mit dieser Zündschaltung, bei der die Zeitkonstanten der beiden RC-Glieder gleich groß sind und die Widerstands-bzw. Kapazitätswerte der RC-Glieder entsprechend den Stoßspitzenspannungen des Leistungsthyristors und des Schwellwertelements bemessen sind, erhält man eine Schutzzündung des Leistungsthyristors immer nur dann, wenn dessen Stoßspitzenspannung erreicht ist.

Die beiden RC-Glieder können die RC-Beschaltung des Leistungsthyristors bilden. Bei dieser Ausgestaltung wird die ohnehin vorhandene RC-Beschaltung des Leistungsthyristors für die Anpassung der Sperrfähigkeit des Schwellwertelementes an die Sperrfähigkeit des Leistungsthyristors benutzt.

Als Schwellwertelement kann ein lichtzündbarer Hilfsthyristor oder ein BOD-Element eingesetzt werden, wobei der Hilfsthyristor überkopfzündfest sein kann.

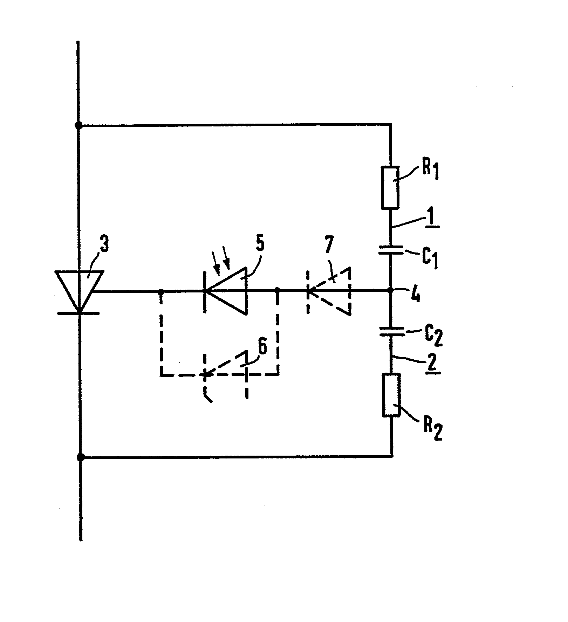

Im folgenden wird die erfindungsgemäße Zündschaltung beispielhaft anhand der Figur näher erläutert.

In der Figur ist der Anoden-Kathoden-Strecke eines Leistungsthyristors 3 die Reihenschaltung von zwei RC-Gliedern 1 und 2 parallel geschaltet, wobei das RC-Glied 1 mit dem Widerstand $R_1$ und der Kapazität $C_1$ mit der Anode des Leistungsthyristors 3 und das RC-Glied mit dem Widerstand $R_2$ und der Kapazität $C_2$ mit der Kathode des Leistungsthyristors 3 verbunden ist. Mit dem Verbindungspunkt 4 der beiden RC-Glieder 1 und 2 ist die Anode eines Hilfsthyristors 5 verbunden, dessen Kathode an das Gate des Leistungsthyristors 3 geführt ist. Im Ausführungsbeispiel ist der Hilfsthyristor 5 lichtzündbar und überkopfzündfest und wird auch zur normalen Zündung des Leistungsthyristors 3 eingesetzt. Außerdem können die RC-Glieder 1 und 2 die übliche RC-Beschaltung des Leistungsthyristors 1 bilden.

Bezeichnet man mit U(t) die an der Anoden-Kathoden-Strecke des gesperrten Leistungsthyristors 3 anstehende Spannung und mit $U_1(t)$ bzw. $U_2(t)$ die am RC-Glied 1 bzw. 2 abfallende Spannung, so lassen sich die Beziehungen aufstellen:

$$U(t) = U_1(t) + U_2(t) \tag{1}$$

$$= (R_1 + R_2) \cdot I + \frac{Q}{C_1 + C_2}$$

$$\frac{dU}{dt} = (R_1 + R_2)\frac{dI}{dt} + \frac{I}{C_1 + C_2} \tag{2}$$

Unter der Annahme eines Spannungssprungs für U(t), d.h. $\frac{dU}{dt} = 0$ und $(Q)_{t=0}$ erhält man aus (1) und (2):

$$U_2 = U \left\{ \frac{C_1}{C_1 + C_2} + \frac{R_2}{R_1 + R_2} - \frac{C_1}{C_1 + C_2} \right\} \cdot e^{-\frac{t}{\mathcal{T}}} \qquad (3)$$

mit $\quad \mathcal{T} = \dfrac{(R_1 + R_2) \cdot C_1 \cdot C_2}{C_1 + C_2}.$

Setzt man

$$\frac{R_2}{R_1 + R_2} - \frac{C_1}{C_1 + C_2} = 0 \qquad (4)$$

was $R_1 C_1 = R_2 C_2$ entspricht, so folgt:

$$\frac{U_2}{U} = \frac{C_1}{C_1 + C_2} \qquad (5)$$

oder $\quad \dfrac{U_{DSM5}}{U_{DSM}} = \dfrac{C_1}{C_1 + C_2} = \dfrac{R_2}{R_1 + R_2}, \qquad (6)$

worin $U_{DSM}$ die positive Stoßspitzenspannung des Leistungsthyristors 3 und $U_{DSM5}$ die Stoßspitzenspannung des Hilfsthyristors 5 ist. Analog lassen sich die RC-Glieder 1 und 2 durch entsprechende Verstimmung auch an die kritische Spannungssteilheit des Thyristors 3 anpassen.

Für die Figur wurde vorausgeetzt, daß der Hilfsthyristor 5 überkopfzündfest ist. Ist dies nicht gegeben, so muß die Schaltung mit einem BOD-Element 6 ergänzt werden, das dem Hilfsthyristor 5 parallel geschaltet ist, wobei der Parallelschaltung noch eine Sperrdiode 7 vorzuschalten ist. Bei dieser Schaltung wird die Schutzfunktion den Leistungsthyristor 3 durch das BOD-Element 6 übernommen, das nunmehr als statischer und dynamischer Überspannungsschutz für den Leistungsthyristor 3 dient. Selbstverständlich kann auch eine andere Ansteuerung des Leistungsthyristors 3 erfolgen, so daß das BOD-Element 6 zusammen mit den entsprechend bemessenen RC-Gliedern 1 und 2 nur noch als Schutzbeschaltung für den Leistungsthyristor 3 dient.

5 Patentansprüche
1 Figur

0164507

## Patentansprüche

1. Zündschaltung für einen Leistungsthyristor mit einem Schwellwertelement zur Schutzzündung bei Überspannung, das zwischen Anode und Gate des Leistungsthyristors geschaltet ist und dessen Stoßspitzenspannung $U_{DSM5}$ kleiner als die Stoßspitzenspannung $U_{DSM}$ des Leistungsthyristors ist, d a d u r c h   g e k e n n z e i c h n e t ,    daß die Anoden-Kathoden-Strecke des Leistungsthyristors (3) von zwei in Reihe geschalteten Serien-RC-Gliedern (1 und 2) überbrückt ist, an deren Verbindungspunkt (4) ein Anschluß des Schwellwertelements (5 bzw. 6) geführt ist und daß für die beiden RC-Glieder (1, 2) gilt

$$\frac{U_{DSM5}}{U_{DSM}} = \frac{C_1}{C_1 + C_2} = \frac{R_2}{R_1 + R_2}$$

und $\qquad R_1 \cdot C_1 = R_2 \cdot C_2$

wobei $R_1$, $C_1$ der Widerstands- bzw. Kapazitätswert des mit der Anode des Leistungsthyristors (3) und $R_2$, $C_2$ der Widerstands- bzw. Kapazitätswert des mit der Kathode des Leistungsthyristors (3) unmittelbar verbundenen RC-Gliedes (1 bzw. 2) ist.

2. Zündschaltung nach Anspruch 1,    d a d u r c h   g e k e n n z e i c h n e t ,    daß die beiden RC-Glieder (1, 2) die RC-Beschaltung des Leistungsthyristors (3) bilden.

3. Zündschaltung nach Anspruch 1 oder 2,   d a d u r c h   g e k e n n z e i c h n e t ,    daß das Schwellwertelement ein lichtzündbarer Hilfsthyristor (5) ist.

4. Zündschaltung nach Anspruch 3, d a d u r c h
g e k e n n z e i c h n e t , daß der Hilfsthyristor
(5) überkopfzündfest ist.

5. Zündschaltung nach einem der Ansprüche 1 bis 3,
d a d u r c h    g e k e n n z e i c h n e t , daß das
Schwellwertglied ein BOD-Element (6) ist.

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 449 548 (HITACHI) <br> * Seiten 3,4 * <br><br> --- | 1,2,5 | H 02 M 1/092 <br> H 03 K 17/08 |
| A | BBC-NACHRICHTEN, Band 59, Nr. 3/4, 1977, Seiten 152-158, Mannheim, DE; P. WETZEL: "Thyristorschutz mit Halbleitern - wirtschaftlich und sicher" <br><br> ----- | | |

RECHERCHIERTE SACHGEBIETE (Int. Cl.4)

H 02 M
H 03 K
H 02 H

Der vorliegende Recherchenbericht wurde für alle Patentansprüche erstellt.

| Recherchenort <br> DEN HAAG | Abschlußdatum der Recherche <br> 16-09-1985 | Prüfer <br> KERN H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82